## Europäisches Patentamt
## European Patent Office
## Office européen des brevets

(11) Numéro de publication: **0 231 692**
**B1**

(19)

(12) **FASCICULE DE BREVET EUROPEEN**

(45) Date de publication du fascicule du brevet:
**11.07.90**

(21) Numéro de dépôt: **86402804.8**

(22) Date de dépôt: **15.12.86**

(51) Int. Cl.⁵: **A47C 31/02**

(54) **Siège, notamment pour véhicule automobile.**

(30) Priorité: **23.01.86 FR 8600934**

(43) Date de publication de la demande:
**12.08.87 Bulletin 87/33**

(45) Mention de la délivrance du brevet:
**11.07.90 Bulletin 90/28**

(84) Etats contractants désignés:
**DE GB IT**

(56) Documents cités:
**DE-A- 1 909 235**
**FR-A- 2 472 923**
**US-A- 3 794 378**
**US-A- 4 534 595**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Girard, Jean-Christophe, 2, rue Viette, F-25200 Montbéliard(FR)**

(74) Mandataire: **Polus, Camille et al, c/o Cabinet Lavoix 2, Place d'Estienne d'Orves, F-75441 Paris Cedex 09(FR)**

ACTORUM AG

## Description

La présente invention concerne un siège destiné, notamment mais non exclusivement, à l'équipement d'un véhicule automobile.

Elle s'applique à un siège constitué d'un coussin et d'un dossier, dans lequel chacun de ceux-ci comporte une matelassure recouverte d'une coiffe, la matelassure étant en général renforcée par une armature rigide ou souple et/ou par des inserts rigides flottant dans la matelassure.

Afin d'assurer une bonne tenue de la coiffe et un aspect esthétique au siège, il est courant de former sur la face du dossier et/ou du coussin sur laquelle s'appuie la personne assise, des parties en creux obtenues par un rappel de la coiffe vers la face opposée du dossier et/ou du coussin.

Ces rappels peuvent par exemple être réalisés au moyen d'un morceau de toile replié appelé tresse, fixé par piqûre à la coiffe et dans lequel est passée une tringle dont les deux extrémités sont fixées à l'armature par l'intermédiaire de chaînettes. Toutefois, la réalisation de tels rappels constitue une opération délicate et longue.

La présente invention se propose de remédier à ces inconvénients. Elle a pour objet un siège constitué d'une partie formant coussin et d'une partie formant dossier, dans lequel l'une au moins des deux parties comporte des moyens de rappel de la coiffe vers la matelassure pour former des parties en creux sur la face avant de ladite partie, qui soit simple et rapide à réaliser.

Dans ce but, les moyens de rappel sont constitués par une pièce monobloc qui comporte au moins une partie extrême réalisée de façon à permettre sa fixation à la coiffe, une partie déformable par compression et une partie munie de moyens de fixation de la pièce à l'intérieur ou au-delà de la matelassure.

La pièce monobloc comporte en outre avantageusement une partie rigide destinée à faciliter la transmission des efforts d'une extrémité à l'autre de la pièce.

La partie déformable par compression peut être par exemple une structure comportant des amorces de lignes horizontales de pliage (du type en accordéon), une structure percée de trous ou d'alvéoles ou constituée de mailles, ou une structure constituée de fils disposés parallèlement entre eux ou en éventail, ou encore une combinaison de deux ou plusieurs de ces structures.

La fixation de la pièce à l'intérieur ou au-delà de la matelassure s'effectue sur l'armature située dans ou au-delà de la matelassure, sur des inserts flottant dans la matelassure ou directement dans la matière constituant la matelassure.

La pièce monobloc peut être terminée par une partie formant crochet, telle qu'une ou plusieurs tiges terminées chacune par un crochet. Elle peut être aussi terminée par au moins une tige munie de crans assurant la fixation par encliquetage de la tige par exemple à l'armature, par l'intermédiaire d'une rondelle munie de moyens d'accrochage à l'armature.

La pièce monobloc est réalisée de préférence en matière plastique, par exemple du polypropylène ou du polyamide.

Selon d'autres caractéristiques :
- la partie extrême fixée à la coiffe à l'une de ses dimensions correspondant au contour de la partie en creux et est fixée à un bord replié de la coiffe par exemple par piqûre, soudure, collage ou agrafage;
- la partie de la pièce munie de moyens de fixation de la pièce à l'intérieur ou au-delà de la matelassure comporte des organes terminaux permettant lors de la fabrication du siège, de tirer la pièce vers la matelassure au moyen d'un outil approprié, ces organes étant par exemple une boucle ou un trou formé sur un crochet.

L'invention va maintenant être décrite de façon plus précise en référence à plusieurs modes de réalisation, donnés uniquement à titre d'exemples et représentés sur les dessins annexés :

- la Figure 1 est une vue en perspective et coupe d'un siège comportant une partie en creux formée par des moyens de rappel de la coiffe selon un premier mode de réalisation de l'invention;
- la Figure 2 est une vue agrandie par rapport à la Figure 1, en perspective avec arrachements des moyens de rappel de la coiffe de la Figure 1;
- la Figure 3 est une vue en élévation de face des moyens de rappel des Figures 1 et 2;
- les Figures 4 et 5 sont des vues en élévation latérale des moyens de rappel de la Figure 3;
- les Figures 6 et 7 sont des vues en élévation d'une variante des organes d'accrochage à l'armature des moyens de rappel des Figures 1 à 5;
- la Figure 8 est une vue en élévation de face partielle d'un second mode de réalisation des moyens de rappel selon l'invention;
- la Figure 9 est une vue en perspective d'un troisième mode de réalisation des moyens de rappel conforme à l'invention;
- les Figures 10 et 11 représentent, respectivement en perspective et en vue de face, une variante des moyens de rappel des Figures 1 à 3, terminés par deux tiges munies de crans assurant la fixation par encliquetage de chaque tige à l'armature;
- la Figure 12 est une vue de dessus de l'une des rondelles représentées sur les Figures 9 et 10;
- la Figure 13 est une vue en élévation latérale des moyens de rappel de la Figure 10;
- la Figure 14 est une vue en perspective d'un quatrième mode de réalisation des moyens de rappel selon l'invention;
- la Figure 15 est une vue en perspective d'une variante des moyens de rappel des Figures 1 à 3 comportant deux moyens différents d'accrochage à une partie plane de l'armature et terminés, l'un par une tige munie de crans et l'autre par une tige portant un clip à son extrémité;
- la Figure 15a représente, en vue de dessus, le détail de la partie plane de la Figure 15, au niveau du trou coopérant avec la tige munie de crans;
- la Figure 15b est une vue de dessous de la partie extrême de la tige portant le clip sur la Figure 15;
- la Figure 15c est une coupe longitudinale de la tige portant le clip sur la Figure 15;
- la Figure 16 est une vue en perspective d'un quatrième mode de réalisation des moyens de rappel selon l'invention;

- la Figure 17 est une vue en élévation de face d'un sixième mode de réalisation des moyens de rappel selon l'invention;
- la Figure 18 représente en perspective avec arrachements deux moyens de rappel selon les Figures 1 à 3 munis de moyens de raccordement l'un à l'autre.

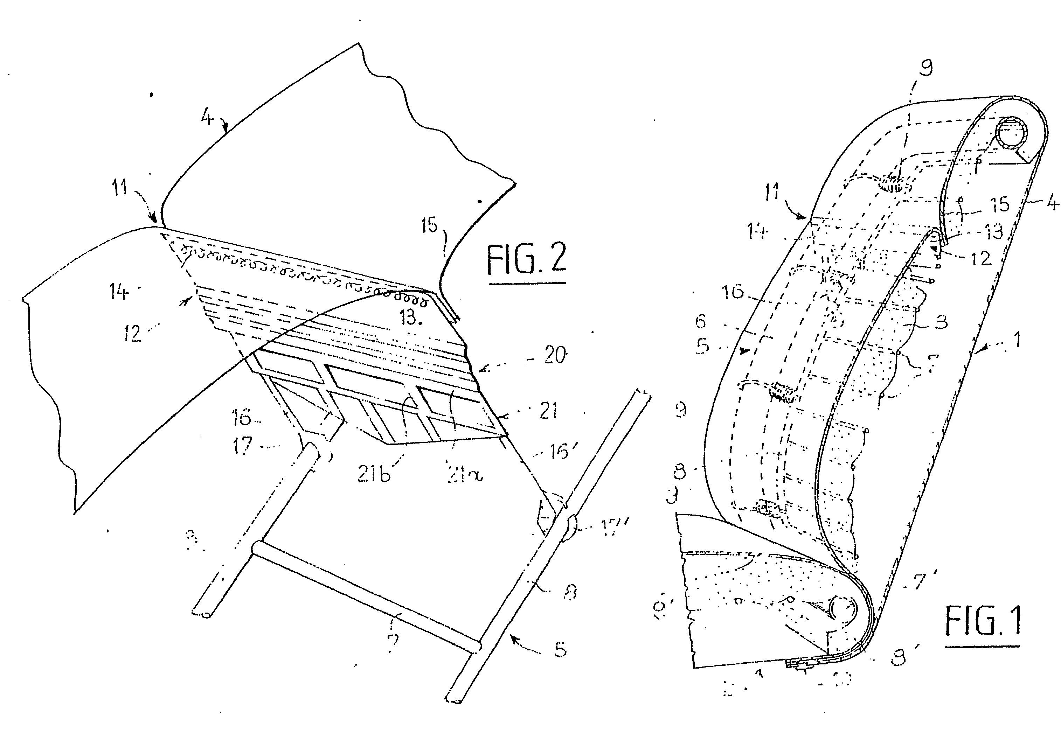

Le siège représenté sur la Figure 1 est constitué d'un dossier 1 et d'un coussin 2. Chacune des deux parties 1 et 2 comporte une matelassure 3 recouverte d'une coiffe 4. La matelassure 3 est munie d'une armature 5, constituée dans l'exemple de la Figure 1 d'une partie rigide 6 et de fils métalliques souples horizontaux 7 fixés à leurs extrémités sur des éléments sensiblement verticaux 8, eux-mêmes reliés par des ressorts 9 à la partie rigide 6. La coiffe 4 est, dans l'exemple décrit, fixée par des agrafes 10 à la partie inférieure du coussin 2.

Un siège tel que décrit comporte en général plusieurs parties en creux sur le dossier et/ou sur le coussin. Pour plus de clarté, on a représenté sur la Figure 1 un siège ne comportant qu'une partie en creux 11 réalisée sur le dossier 1.

Cette partie en creux 11 est formée par des moyens de rappel de la coiffe 4 vers la matelassure 3 qui sont constitués d'une pièce 12 en matière plastique monobloc, réalisée par exemple en polypropylène, polyamide ou analogue.

La pièce 12 est fixée à la coiffe 4 à l'une de ses extrémités; dans ce but, elle se termine par une surface plane 13 fixée par une piqûre 14 à un bord replié 15 de la coiffe 4.

Dans le mode de réalisation de la pièce 12 représentée sur les Figures 2 à 7, celle-ci se termine par deux tiges 16 et 16' pourvues respectivement de crochets terminaux dont on a représenté deux variantes possibles 17 et 17' et qui sont destinées à être accrochées sur l'armature 5. Le crochet 17 est susceptible de se refermer élastiquement sur l'armature 5 qu'il enserre dans un logement 18. Le crochet 17' comporte un doigt élastique 19 de maintien de l'armature 5 dans un logement 19'.

Entre ses deux parties extrêmes 13 et 17, 17', la pièce 12 comporte une partie 20 réalisé "en accordéon" et une partie rigide 21 réalisée, dans l'exemple représenté, par un réseau d'éléments tubulaires horizontaux 21a et verticaux 21b. La partie 20 n'oppose pas de résistance à la compression quand une personne s'assied sur le siège mais elle est résistante à la traction afin que, lors de la fabrication du dossier, on puisse bien tirer sur la coiffe 4 pour former correctement la partie en creux 11. Pour améliorer la résistance de la partie 20, il est avantageux, de façon connue en soi, de diminuer l'épaisseur du matériau qui la constitue au niveau des lignes de pliage de l'accordéon. La partie rigide 21 permet la transmission des efforts depuis l'armature 5 jusqu'à la coiffe 4.

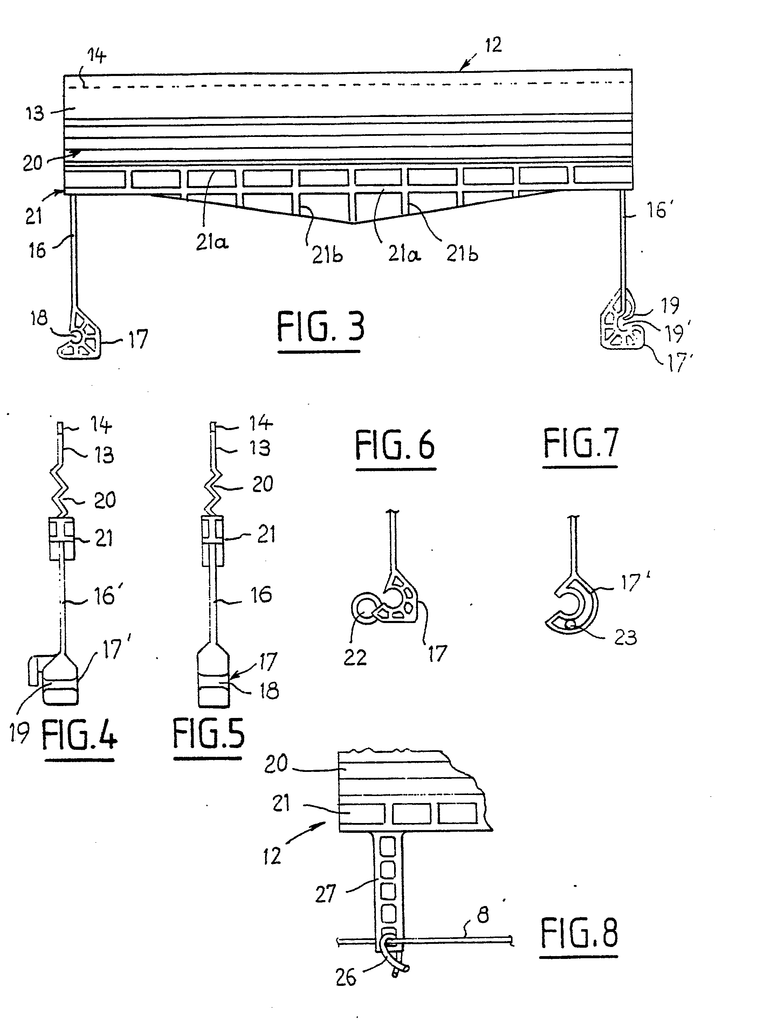

Dans les deux variantes des Figures 6 et 7, les crochets 17, 17' sont munis respectivement d'une boucle 22 et d'un trou 23 permettant de tirer ceux-ci vers l'armature 5 afin de les y accrocher.

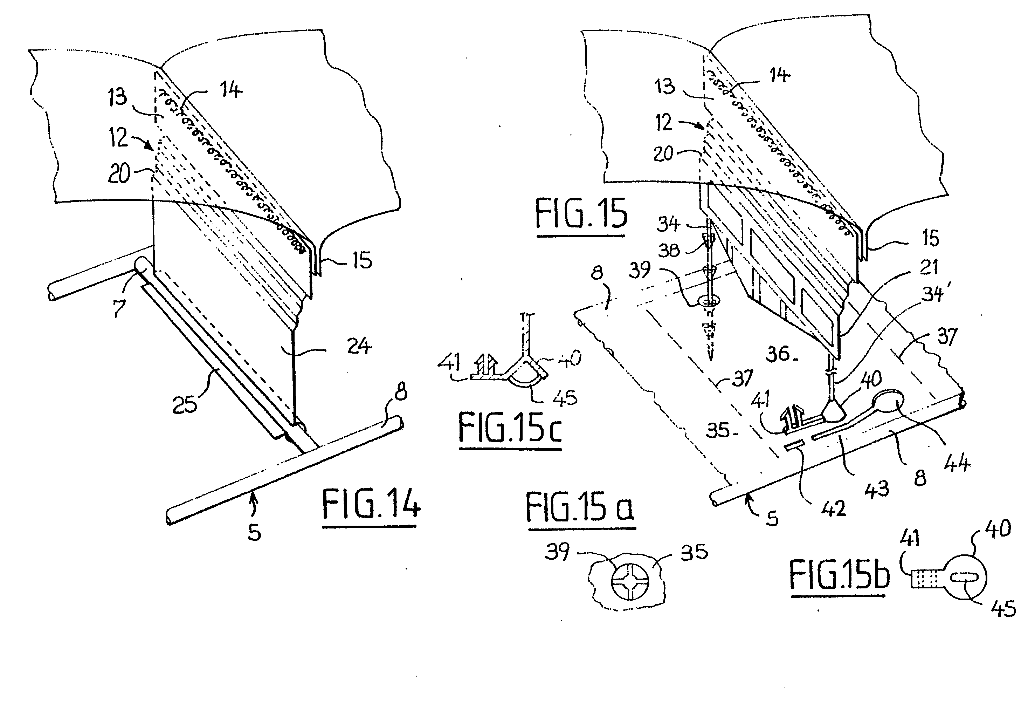

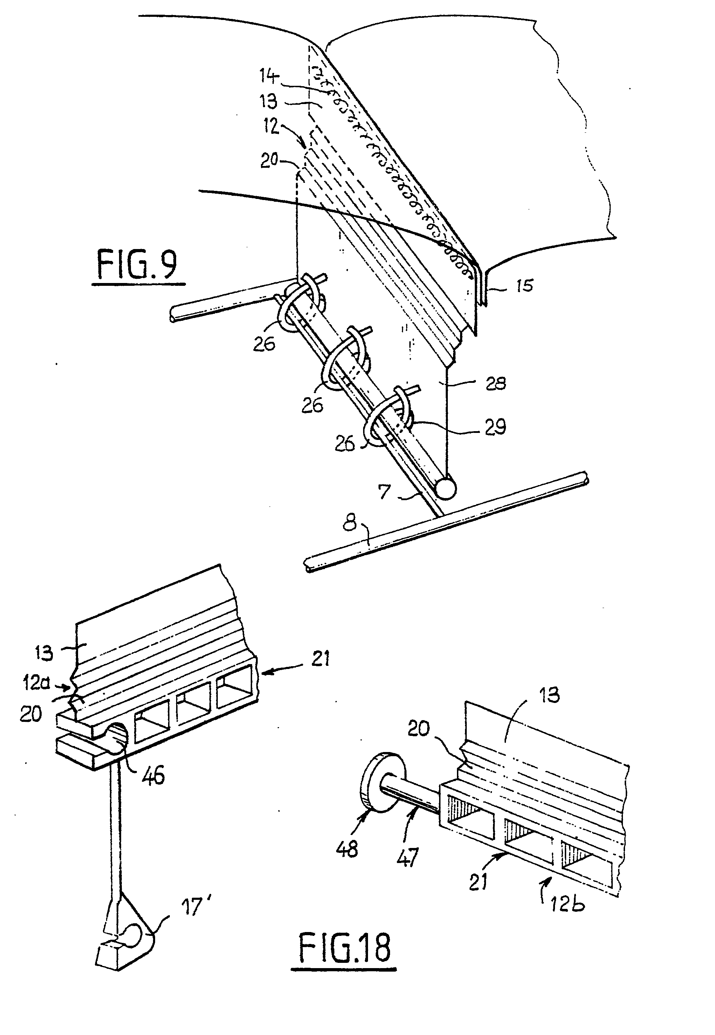

Dans le mode de réalisation des moyens d'accrochage de la pièce 12 à l'armature 5, représenté à la Figure 14, les tiges 16 et 16' ont été remplacées par une partie plane 24 terminée par un crochet longitudinal 25 susceptible de se refermer élastiquement sur l'armature 5.

Le réseau tubulaire rigide 21 de la pièce 12 a ici été supprimé, car la partie plane 24 est elle-même rigide, mais on pourrait concevoir une réalisation analogue à celle de la Figure 4 dans laquelle la partie 21 serait conservée, afin d'assurer une plus grande rigidité à la pièce 12. D'autre part, un ou plusieurs trous pourraient être percés dans la partie 24 pour le passage d'un outil en forme de crochet.

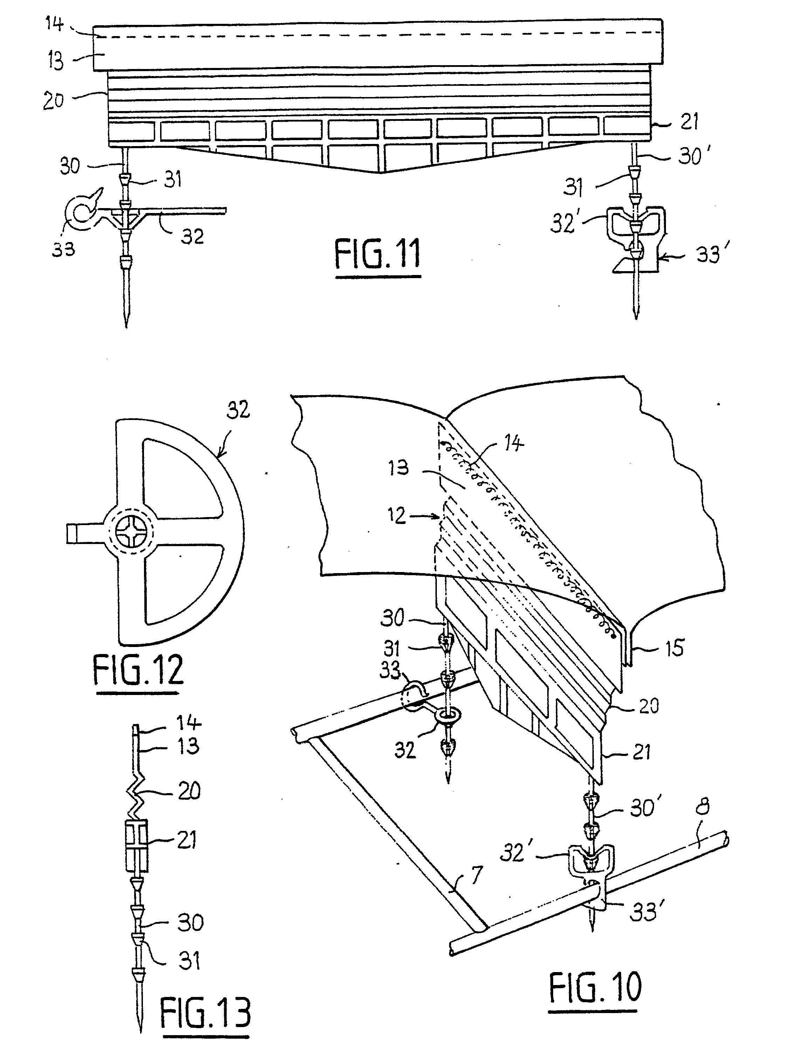

Les Figures 8 et 9 montrent deux moyens de réalisation de la pièce 12 dans lesquels celle-ci est susceptible d'être accrochée à l'armature 5 par des agrafes 26. Sur la Figure 8, la pièce 12 est terminée par deux chaînettes 27 analogues aux tiges 16 et 16' des Figures 2 à 5, une seule chaînette 27 étant visible. Sur la Figure 9, la pièce 12 est terminée par une partie plane 28 percée de trous 29 pour le passage des agrafes 26. Comme dans l'exemple représenté sur la Figure 14, la partie rigide 21 a été remplacée par la partie plane 28 mais aurait pu être conservée.

Dans les modes de réalisation des Figures 10 à 13, la pièce 12 comporte deux tiges terminales 30 et 30' munies de crans 31 assurant la fixation par encliquetage de chaque tige 30, 30' sur une rondelle 32, 32' solidaire d'une agrafe 33, 33' d'accrochage à l'armature 5. L'agrafe 33' se trouve dans l'axe de la rondelle 32', ce qui implique une légère torsion de la tige 30' lorsque celle-ci est encliquetée dans la rondelle 32'.

Sur la Figure 15 on a représenté une pièce 12 terminée par deux tiges 34 et 34' munies de moyens d'accrochage à une partie plane de l'armature 5 telle qu'une tôle 35 soudée à deux montants 8 de l'armature 5. Cette tôle 35 peut s'étendre sur toute la longueur de l'armature 5 ou simplement sur une faible largeur, et ne constituer ainsi qu'une barrette 36 délimitée par les traits mixtes 37.

La tige 34 est analogue aux tiges 30 et 30', et comporte des crans 38 assurant la fixation par encliquetage de la tige 34 sur une rondelle 39 réalisée dans la tôle 35 ou la barrette 36.

La tige 34' est munie d'une partie d'extrémité conique 40 pourvue d'un clip 41 destiné à coopérer avec un trou 42 réalisé dans la tôle 35 pour assurer la fixation de la tige 34' à l'armature 5. Un trou oblong 43 terminé par un trou circulaire 44 est réalisé également dans la tôle 35 pour le passage de la partie conique 40, laquelle est introduite dans le trou 44 avant d'être amenée dans le trou oblong 43. Une boucle 45 solidaire de la partie conique 40 permet la mise en place de l'ensemble à l'aide d'un outil en forme de crochet.

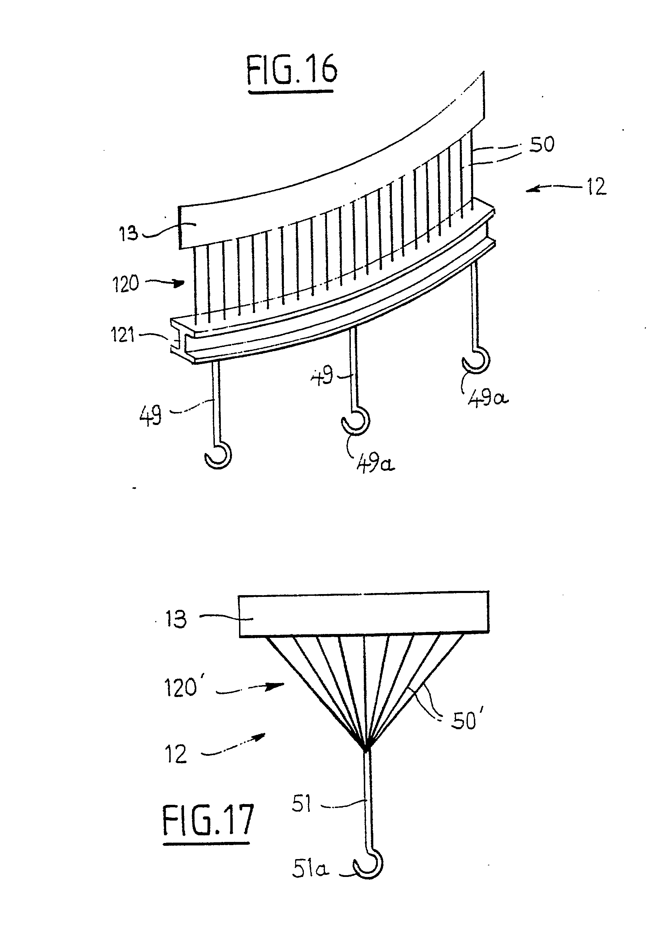

Les Figures 16 et 17 représentent deux modes de réalisation de moyens de rappel selon l'invention, dans lesquels la partie 120 déformable par compression est constituée de fils 50 parallèles entre eux (Figure 16) ou 50' disposés dans un éventail (Figure 17). La pièce 12 représentée sur la Figure 16 est terminée par trois tiges 49 analogues à la tige 51, munies de crochets 49a, et permet la réalisation d'une partie en creux courbe. On a également représenté sur la Figure 16 un autre mode de réalisation 121 de la partie rigide ayant en section une forme de double T. Sur la Figure 17, la partie rigide 121 a été supprimée, les fils 50′ convergeant à la partie supérieure d'une tige 51 unique à crochet 51a d'accrochage de la pièce 12, à l'armature 5 par exemple.

Le siège qui vient d'être décrit présente des avantages substantiels :

Il est simple à réaliser et ne nécessite pas l'emploi d'une main d'oeuvre spécialisée. Préalablement à la pose de la coiffe 4 sur le siège, on assemble celle-ci et la pièce 12 par piqûre. On présente alors l'ensemble d'un côté de la matelassure 3 et on tire les extrémités des tiges 16, 16′, 30, 30′, 34 ou 34′ ou des parties planes 24 ou 28 manuellement ou, de préférence, au moyen d'un outil en forme de crochet, et on fixe celle-ci à l'armature 5. Dans le cas où cette fixation s'effectue au moyen de rondelles telles que 32, 32′, celles-ci ont été préalablement accrochées à l'armature 5 au moyen des agrafes 33, 33′.

Dans les modes de réalisation où la pièce 12 est terminée par des tiges 30, 30′, 34 munies de crans 31, 38, ceux-ci permettent un réglage simple de la longueur utile des tiges.

Une bonne tenue de la coiffe 4 est assurée par la pièce 12, ce qui donne un aspect esthétique au siège quand celui-ci est inoccupé, tandis que la partie 20 de la pièce 12 contribue à son confort.

L'invention est applicable à la réalisation de parties en creux de forme quelconque. A titre d'exemple, elle pourrait s'appliquer à des parties en creux ponctuelles, la pièce 12 comportant des parties 13, 20 et 21 réduites à une tige située dans le prolongement d'une tige telle que la tige 16, unique. L'invention pourrait aussi s'appliquer à des parties en creux constituant un polygone, par exemple un carré, la pièce monobloc étant alors constituée de quatre parties identiques à la pièce 12 des exemples décrits. A titre d'exemple, on a représenté sur la Figure 18, deux pièces monobloc 12a et 12b munies de moyens de raccordement l'une à l'autre, la pièce 12a comportant un trou 46 dans lequel vient s'engager un axe 47 muni d'une butée 48, de la pièce 12b. Au lieu de raccorder entre elles plusieurs pièces monobloc telles que 12a et 12b, on pourrait aussi réaliser une pièce carrée monobloc.

D'autre part, dans tous les exemples, la pièce monobloc peut être fixée à la coiffe 4 par un moyen différent de celui décrit, par exemple par collage, soudure ou agrafage.

La partie 20 déformable par compression, peut être réalisée différemment. A titre d'exemple, elle pourrait être une structure percée de trous ou d'alvéoles ou encore comporter des mailles constituant une structure en "filet de pêche".

Dans les exemples décrits, la pièce 12 est fixée à une partie rigide ou souple de l'armature, mais elle peut être également fixée à des inserts rigides flottant dans la matelassure 3 ou à la matelassure elle-même, si celle-ci est réalisée en une matière susceptible de ne pas se déchirer, telle que du crin.

La partie extrême 13, de même que les parties 24 ou 28 peuvent être percées de trous destinés à accroître leur souplesse.

## Revendications

1 - Siège destiné notamment à un véhicule automobile, comportant un coussin (2) et un dossier (1) chacun pourvu d'une matelassure (3) recouverte d'une coiffe (4) et généralement renforcée par une armature (5) et/ou par des inserts rigides flottant dans ladite matelassure, et dans lequel l'un au moins du coussin (2) et du dossier (1) est équipé de moyens de rappel de la coiffe (4) vers la matelassure (3) pour former des parties en creux (11) sur sa face avant, caractérisé en ce que les moyens de rappel sont constitué par comprennent une pièce (12) monobloc qui comporte au moins une partie extrême (13) réalisée de façon à permettre sa fixation à la coiffe (4), une partie (20, 120, 120′) déformable par compression et une partie (16, 16′; 27; 28; 30, 30′; 24; 34, 34′; 49; 51) munie de moyens de fixation (17, 17′; 26; 31, 32, 32′; 25; 38, 40; 49a; 51a) de la pièce (12) à l'intérieur ou au-delà de la matelassure (3).

2 - Siège selon la revendication 1, caractérisé en ce que la pièce (12) monobloc comporte une partie rigide (21, 121) destinée à faciliter la transmission des efforts d'une extrémité à l'autre de la pièce.

3 - Siège selon l'une des revendications 1 et 2, caractérisé en ce que la partie (20) déformable par compression est une structure présentant des amorces de lignes horizontales de pliage telle qu'en accordéon, ou une structure constituée de fils (50) parallèles entre eux ou en éventail (50′), ou une structure percée de trous ou d'alvéoles ou constituée de mailles ou encore une combinaison de deux ou plusieurs de ces structures.

4 - Siège selon l'une des revendications 1 à 3, caractérisé en ce que les moyens de fixation de la pièce (12) à l'intérieur ou au-delà de la matelassure (3) coopèrent soit avec l'armature (5) située dans ou au-delà de la matelassure (3), soit avec des inserts flottants dans la matelassure (3), soit directement avec la matière constituant cette dernière.

5 - Siège selon l'une des revendications 1 à 4, caractérisé en ce que la pièce (12) en matière plastique monobloc est terminée par des moyens d'accrochage, constitués par exemple par l'un des moyens suivants : au moins une tige (16 ou 16′; 49; 51) pourvue d'un crochet terminal (17 ou 17′; 49a; 51a), au moins une tige (30, 30′, 34) munie de crans (31, 38) assurant la fixation de la tige par encliquetage, au moins une chaînette (27), une partie plane (24; 28).

6 - Siège selon la revendication 5, caractérisé en ce que la fixation de la tige (34, 34′) est réalisée au moyen de crans (38) ou d'une partie d'extrémité conique (40) pourvue d'un clip (41), adaptés pour coopérer respectivement avec un trou (39; 42) réalisé dans une tôle (35) soudée à deux montants (8) de l'armature (5).

7 - Siège selon la revendication 5, caractérisé en ce que la fixation de la tige (30, 30′) est réalisée au moyen d'une rondelle (32, 32′) encliquetée sur la tige et solidaire d'une agrafe (33, 33′) d'accrochage.

8 - Siège selon la revendication 5, caractérisé en ce que la chaînette (27) ou la partie plane (24, 28) est pourvue d'un crochet terminal (25) ou d'agrafes (26) d'accrochage.

9 - Siège selon l'une des revendications 1 à 8, caractérisé en ce que la partie de la pièce (12) munie de moyens de fixation comporte des organes terminaux permettant lors de la fabrication du siège, de tirer la pièce (12) vers la matelassure (5) au moyen d'un outil approprié, ces organes étant par exemple une boucle (22) ou un trou (23) formé sur un crochet (17, 17').

10 - Siège selon l'une des revendications 1 à 9, caractérisé en ce que la partie extrême (13) assujettie à la coiffe (4) a l'une de ses dimensions correspondant au contour de la partie en creux (11) et est fixée à un bord replié de la coiffe (4) par exemple par piqûre (14) soudage, collage ou agrafage.

11 - Siège selon l'une quelconque des revendications précédentes, caractérisé en ce que la pièce (12) monobloc est réalisée en matière plastique, par exemple en polypropylène ou en polyamide.

## Patentansprüche

1. Sitz, insbesondere für ein Kraftfahrzeug mit einem Sitzpolster (2) und einer Rücklehne (1), die jeweils mit einer Polsterung (3) versehen sind, die mit einem Bezug (4) bezogen ist und allgemein durch ein Verstärkung (5) und/oder starre Einlagen verstärkt ist, die lose in der Polsterung angeordnet sind, wobei wenigstens das Sitzpolster (2) oder die Rücklehne (1) mit Einrichtungen zum Ziehen des Bezuges (4) gegen die Polsterung (3) versehen ist, so daß Vertiefungen (11) auf der Vorderfläche gebildet werden, dadurch gekennzeichnet, daß die Einrichtung zum Ziehen aus einem in einem Stück ausgebildeten Teil (12) bestehen, der wenigstens einen Endabschnitt (13) aufweist, der so ausgebildet ist, daß er am Bezug (4) befestigt werden kann, einen Abschnitt (20, 120, 120'), der durch Kompression verformbar ist, und einen Abschnitt (16, 16'; 27; 28, 30, 30'; 24, 34, 34'; 49, 51) aufweist, der mit Einrichtungen (17, 17'; 26; 31, 32, 32'; 25; 38, 40; 49a; 51a) zum Befestigen des Teils (12) im Inneren oder jenseits der Polsterung (3) versehen ist.

2. Sitz nach Anspruch 1, dadurch gekennzeichnet, daß der in einem Stück ausgebildete Teil (12) einen starren Abschnitt (21, 121) umfaßt, der dazu bestimmt ist, die Übertragung von Spannungen von einem Ende zum anderen Ende des Teils zu erleichtern.

3. Sitz nach einem der Ansprüche 1 und 2, dadurch gekennzeichnet, daß der Abschnitt (20), der durch Kompression verformbar ist, einen Aufbau der Anfangsabschnitte mit horizontalen Faltungslinien in der Art eines Akkordeons zeigt, oder einen Aufbau, der aus parallel zueinander verlaufenden Fäden (50) oder fächerförmig verlaufenden Fäden (50') besteht, oder einen Aufbau, der von Löchern oder Zellen durchzogen ist oder aus Gittern besteht, oder einen Aufbau aus einer Kombination von zwei oder mehreren dieser Aufbauten hat.

4. Sitz nach einem der Ansprüche 1 bis 3, dadurch gekennzeichnet, daß die Einrichtungen zum Befestigen des Teils (12) im Inneren oder jenseits der Polsterung entweder mit der Verstärkung (5), die sich in der Polsterung (3) oder jenseits der Polsterung (3) befindet, oder mit den Einlagen, die lose in der Polsterung angeordnet sind, oder direkt mit dem Material zusammenarbeiten, das letztere bildet.

5. Sitz nach einem der Ansprüche 1 bis 4, dadurch gekennzeichnet, daß der Teil (12) in einem Stück aus einem Kunststoffmaterial gebildet ist und in Hakeneinrichtungen endet, die beispielsweise von einer der folgenden Einrichtungen gebildet sind: Wenigstens ein Stiel (16 oder 16', 49; 51), der mit einem Hakenende (17 oder 17'; 49a; 51a) versehen ist, wenigstens ein Stiel (30, 30', 34), der mit Stufen (31, 38') versehen ist, die die Befestigung des Stiels durch Einrasten sicherstellen, wenigstens eine Kette (27), ein ebener Abschnitt (24; 28).

6. Sitz nach Anspruch 5, dadurch gekennzeichnet, daß die Befestigung des Stiels (34, 34') mittels der Stufen (38) oder mittels eines konischen Endabschnittes (40), der mit einer Klammer (41) versehen ist, verwirklicht ist, die jeweils mit einem Loch (39–42) zusammenarbeiten, das in einem Blech (35) ausgebildet ist, das an zwei Stäbe (8) der Verstärkung (5) geschweißt ist.

7. Sitz nach Anspruch 5, dadurch gekennzeichnet, daß die Befestigung des Stiels (30, 30') mittels einer Scheibe (32, 32') verwirklicht ist, die auf den Stiel geklemmt ist und formschlüssig mit einer Hakenspange (33, 33') versehen ist.

8. Sitz nach Anspruch 5, dadurch gekennzeichnet, daß die Kette (27) oder der ebene Teil (24, 28) mit einem Hakenende (25) oder mit Hakenspangen (26) versehen ist.

9. Sitz nach einem der Ansprüche 1 bis 8, dadurch gekennzeichnet, daß der Abschnitt des Teils (12), der mit Befestigungseinrichtungen versehen ist, Endeinrichtungen umfaßt, die es erlauben, während der Herstellung des Sitzes den Teil (12) zur Polsterung (3) mittels eines geeigneten Werkzeuges zu ziehen, wobei diese Einrichtungen beispielsweise aus einem Ring (22) oder einem Loch (23) bestehen, das in einem Haken (17, 17') ausgebildet ist.

10. Sitz nach einem der Ansprüche 1 bis 9, dadurch gekennzeichnet, daß der Endabschnitt (13), der am Bezug (4) befestigt ist, mit einer seiner Abmessungen der Kontur der Vertiefung (11) entspricht und an einem umgeschlagenen Rand des Bezuges (4), beispielsweise durch eine Naht (14), durch Schweißen, Kleben oder Klammern befestigt ist.

11. Sitz nach einem der vorhergehenden Anspüche, dadurch gekennzeichnet, daß der in einem Stück ausgebildete Teil (12) aus einem Kunststoffmaterial, beispielsweise aus Polypropylen oder Polyamid gebildet ist.

## Claims

1. A seat intended in particular for a motor vehicle, comprising a squab (2) and a back rest (1) each provided with a padding (3) covered by a cover (4) and generally reinforced by a frame (5) and/or by rigid inserts freely arranged in the said padding, and wherein at least either the squab (2) or back rest (1) is fitted with means for re-straining the cover (4) towards the padding (3) to form indented portions (11) on its front side, characterized in that the re-straining means are constituted by a monobloc part (12) which comprises at least one end portion (13) formed so that it can be fixed to the cover (4), a part (20, 120, 120') deformable by compression and a part (16, 16'; 27; 28; 30, 30'; 24; 34, 34'; 49; 51) provided with means (18, 17'; 26; 31; 32, 32'; 25; 38, 40; 49a; 51a) for securing the part (12) inside or outside the padding (3).

2. A seat according to claim 1, characterized in that the monobloc part (12) comprises a rigid part (21, 121) intended to facilitate the transmission of the stresses from one end of the part to the other.

3. A seat according to one of claims 1 and 2, characterized in that the part (20) which is deformable by compression is a structure having the beginnings of horizontal accordion-type fold lines, or a structure constituted by wires (50) parallel to each other or arranged in a fan-shaped configuration (50'), or a structure pierced by holes or cavities or constituted by meshes or yet again a combination of two or several of these structures.

4. A seat according to one of claims 1 to 3, characterized in that the means for securing the part (12) inside or outside the padding (3) cooperate either with the frame (5) situated inside or outside the padding (3) or with the inserts freely arranged in the padding (3), or directly with the material constituting the latter.

5. A seat according to one of claims 1 to 4, characterized in that the monobloc part (12) made of a plastic material ends in fastening means, constituted for example by on of the following means: at least one rod (16 or 16'; 49; 51) provided with an end hook (17 or 17'; 49a, 51a), at least one rod (30, 30', 34) provided with catches (31, 38) ensuring the fixing of the rod by catch engagement, at least one small chain (27), a flat portion (24; 28).

6. A seat according to claim 5, characterized in that the fixing of the rod (34, 34') is effected by means of catches (38) or a part (40) with a conical end provided with a clip (41), adapted to cooperate with a respective hole (39; 42) formed in a sheet (35) which is welded to two arms (8) of the frame (5).

7. A seat according to claim 5, characterized in that the means for fixing the rod (30, 30') is obtained by means of a ring (32, 32') catch engaged on the rod and being integral with a fastening clip (33, 33').

8. A seat according to claim 5, characterized in that the small chain (27) or the flat portion (24, 28) is provided with an end hook (25) or fastening clips (26).

9. A seat according to one of claims 1 to 8, characterized in that the portion of the part (12) provided with the fastening means comprises end fittings allowing the part (12) to be drawn towards the padding (3) by means of an appropriate tool when the seat is manufactured, these elements being, for example, a ring (22) or a hole (23) formed on a hook (17, 17').

10. A seat according to one of claims 1 to 9, characterized in that the end portion (13) fastened to the cover (4) has one of its dimensions corresponding to the contour of the indented portion (11) and is fastened to a folded over edge of the cover (4), for example, by stitching (14), welding, bonding or clipping.

11. A seat according to any one of the preceding claims, characterized in that the monobloc part (12) is made of a plastic material, for example of polypropylene or polyamide.

FIG.1

FIG.2

FIG. 3

FIG.4

FIG.5

FIG.6

FIG.7

FIG.8

FIG.11

FIG.12

FIG.13

FIG.10

FIG.14

FIG.15

FIG.15c

FIG.15a

FIG.15b

EP 0 231 692 B1

## FIG.9

14
13
12
20
15
26
26
26
28
29
7
8

## FIG.18

13
12a
20
46
17′
21
13
20
48
47
21
12b

## FIG.16

## FIG.17